# EUROPEAN PATENT SPECIFICATION

(11) **EP 3 245 637 B1**
(45) Date of publication and mention of the grant of the patent: **26.12.2018**
(21) Application number: 16700516.4
(22) Date of filing: 11.01.2016
(51) Int. Cl.: G08B 13/186

(54) **BUILDING MONITORING SYSTEM BASED ON LIGHT GUIDES**
GEBÄUDEÜBERWACHUNGSSYSTEM BASIEREND AUF LICHTLEITERN
SYSTÈME DE SURVEILLANCE DE BÂTIMENT À GUIDE ONDES OPTIQUES

(30) Priority: 14.01.2015 GB 201500561; 14.01.2015 EP 15275010
(43) Date of publication of application: 22.11.2017
(73) Proprietor: MBDA UK Limited, Stevenage, Hertfordshire SG1 2DA (GB)
(72) Inventor: MILLER, Lee, Douglas, Bristol, South Gloucestershire BS34 7QW (GB); MCKEE, Karen Louise, Bristol, South Gloucestershire BS34 7QW (GB)
(74) Representative: BAE SYSTEMS plc Group IP Department
(86) International application number: PCT/GB2016/050052
(87) International publication number: WO 2016/113547

(56) References cited:
- EP-A1- 0 247 940
- WO-A1-2014/041350
- DE-A1- 3 436 030
- US-A- 4 379 289

## Description

### BACKGROUND

The present invention concerns a building monitoring system. More particularly, but not exclusively, this invention concerns a method and apparatus for monitoring a building comprising a plurality of rooms.

Various methods are known of monitoring rooms in a building. For example, many buildings include intruder alarms in which passive IR or other detectors are provided to detect intruders and sound an alarm, usually an audible alarm, and in many cases such alarms also send an alarm signal over a telephone line to a monitoring centre. Similarly, smoke detectors, manual fire alarms and other fire detectors are frequently used to monitor rooms in a building, again often with a reporting signal sent to a monitoring centre if the detector is triggered. Buildings are also often monitored by security guards, who may communicate wirelessly with a central security office, for example by short-wave radio.

In WO2014/041350 (MBDA UK Limited), we describe a room occupancy sensing apparatus and method for a building comprising a plurality of rooms. A light source emits a series of light pulses, a plurality of waveguides deliver light from the light source to output nodes located in the rooms, and a signal capture unit receives output signals resulting from light reflected by objects in the rooms. The apparatus detects movement, of for example a person, in a room and ascertains the room concerned by virtue of (i) detecting a difference between the shape of the waveform of the signal received at the signal capture unit in response to a first emitted light pulse and the shape of the waveform of the signal received at the signal capture unit in response to a second emitted light pulse and (ii) relating said reflected light pulses to the appropriate output node and therefore to the room associated with that output node.

Central monitoring of dedicated devices such as intruder detectors and fire detectors often requires multiple communication networks for each device. Human monitoring, for example by security guards, is much more flexible than using fixed, dedicated monitors, but is labour-intensive and hence expensive. Moreover, some incidents, for example fires, present very serious dangers to a security guard, and the need to monitor the incident must be balanced against the safety of the personnel involved. If, for example, a person is injured in a building that is on fire, the need to guide fire or paramedic personnel to the casualty must be balanced against the threat to the security guard in remaining in the building.

The present invention seeks to mitigate one or more of the above-mentioned problems. Alternatively or additionally, the present invention seeks to provide an improved building monitoring system.

### SUMMARY

The present invention provides, according to a first aspect, apparatus for monitoring a building having a plurality of rooms, the apparatus comprising:
- a plurality of beacons each arranged to transmit a light output signal;
- a plurality of waveguides for deployment in the building so that each of the plurality of rooms has at least one of the waveguides arranged to receive the light output signal from one or more of the beacons when said one or more of the beacons is active in that room;
- at least one signal capture unit arranged to receive, via the waveguides, the light output signals resulting from the beacons in the rooms; and
- a signal processor;
wherein the signal processor is arranged to distinguish, in use, the light output signal from a first beacon in a first room from the light output signal from a second beacon in a second, different, room.

The present invention provides, according to a second aspect, a method of monitoring a building having a plurality of rooms, comprising:
- at least one beacon in at least of the one rooms transmitting at least one light output signal;
- at least one waveguide in a room receiving the light output signal(s) from one or more of the beacons when said one or more of the beacons is active in that room;
- receiving, via the waveguides, the light output signals resulting from the beacons in the rooms; and
- processing the light output signals received via the waveguides to identify the location and/or status of the beacon.

The present invention provides, according to a third aspect, a building having a plurality of rooms, the building including an apparatus according to the first aspect.

It will of course be appreciated that features described below in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
FIG. 1 shows a room monitoring system (a) in accordance with a first embodiment of the present invention and (b) in accordance with an example alternative embodiment of the invention;
FIG. 2 shows the room monitoring system of the first embodiment in (a) a room containing a deployed portable beacon, (b) a room containing a permanently installed beacon, and (c) a room containing a person wearing a wearable beacon;
FIG. 3 shows the occupancy sensing system of the first embodiment in use in two adjacent rooms;
FIGS. 4a to 4d show the steps of emitting and receiving light pulses as used in a further example embodiment of the invention;
FIG 5 shows the arrangement of the network of nodes provided for emitting and receiving light pulses in the further embodiment; and
FIG 6 shows a display used in the further embodiment.

### DETAILED DESCRIPTION

The apparatus of the first aspect of the invention is apparatus for monitoring a building having a plurality of rooms. A plurality of beacons is each arranged to transmit a light output signal. The apparatus also comprises a plurality of waveguides suitable for deployment in the building so that each of the plurality of rooms has at least one of the waveguides arranged to receive the light output signal from one or more of the beacons when said one or more of the beacons is active in that room. There is at least one signal capture unit arranged to receive, via the waveguides, the light output signals resulting from the beacons in the rooms. A signal processor is arranged to distinguish, in use, the light output signal from a first beacon in a first room from the light output signal from a second beacon in a second, different, room.

An advantage of using light for communication from and, optionally, to the beacons is that the light output signals transmitted by beacons in different rooms can be identical, as room layouts are often such that light is substantially prevented from transmitting from one room to another. Rooms are typically separated by partitions walls that do not transmit light. Even where rooms are separated by partitions that transmit some wavelengths of light, the light may be selected to be of an operating wavelength that is not transmitted by the partition (for example, in the case of a glass partition, the wavelength may be an appropriate infrared wavelength).

The light output signal transmitted by the beacons may be a pulse or a series of pulses.

The waveguides may conveniently be in the form of fibre optic cable.

It may be that the light is of an intensity and/or an operating wavelength selected to provide a signal-to-noise ratio sufficient to distinguish the light output signals from ambient light sources. The apparatus may include a filter to attenuate incoming light of wavelengths other than the operating wavelength.

Some or all of the beacons may be portable beacons for ad hoc deployment in a room.

Some or all of the beacons may be wearable beacons for wearing by personnel within the building. The signal processor may be configured to track the location in the building of a person wearing the beacon, for example a paramedic, fireman, security guard or lone worker.

Some or all of the beacons may be fixable beacons, that is beacons configured for permanent deployment in a room.

Some or all of the beacons may be arranged to send a pre-selected signal indicative of an event or other circumstance. For example, a beacon may be arranged to send a pre-selected signal indicative of an outbreak of fire. A beacon may be arranged to send a pre-selected signal indicative of the presence of an injured person. A beacon may be arranged to send a pre-selected signal indicative of the absence of any abnormal circumstances - i.e. an "all clear" signal. Some or all of the beacons may each have a dedicated purpose, such that the beacon is arranged to send only one kind of pre-selected signal, e.g. indicative of the presence of an injured person. Some or all of the beacons may be selectably configurable to send any of a plurality of the pre-selected signals. The configuration of a selectively configurable beacon may be selected by sending a signal to the beacon. The signal may be sent via one or more waveguides, for example the waveguides arranged to receive the light output signal from one or more of the beacons. The signal may be, for example, a code pre-selected to identify the configuration being selected or a wavelength of light pre-selected to identify the configuration being selected.

The signal processor may be arranged to distinguish between the light output signal from the first beacon and the light output signal from the second beacon using a time delay between the light output signal from the first beacon arriving at the signal capture unit and the light output signal from the second beacon arriving at the signal capture unit. The time delay may result from a difference between the waveguide path length from the first room to the signal capture unit and the waveguide path length from the second room to the signal capture unit. The waveguide path length may be different for every waveguide in every room. The waveguide path length may be the same for every waveguide in any given room, but different for every waveguide in every other room; that is, each room may be associated with a unique waveguide path length.

The light output signal may carry encoded data.

The beacons may be arranged to transmit the light output signals in response to a synchronisation signal. The beacon may be arranged to transmit the light output signal after a pre-selected time delay following receipt of the synchronisation signal. The beacon may include or be connected to a clock and the synchronisation signal may be provided by the clock. For example, each beacon may be configured to transmit its light output signal at a specific time relative to each other beacon, for example each beacon may transmit at a time unique to it or each beacon may transmit at the same time. The synchronisation signal may be a signal transmitted wirelessly to the beacon. The apparatus may include a light source for providing the synchronisation signal and the synchronisation signal may be a synchronisation light signal transmitted to the beacon from the light source. The synchronisation light signal may be transmitted to the beacon from the light source using a waveguide. The waveguide may be one of the plurality of waveguides arranged to receive the light output signal from one or more of the beacons.

The apparatus may include a memory for recording the status and/or location of the beacons.

The apparatus may include one or more displays for displaying the status and/or location of the beacons. For example, at least one of the displays may be for installation in a control centre in the building and/or at least one of the displays may be a portable display (e.g. a tablet computer). The portable display may include one of the beacons; thus, the portable display may both transmit its own location and/or status and display the location and/or status of the other beacons.

At least a part of the signal processor may be formed as part of the signal capture unit. Alternatively, the signal processor may be wholly separate from the signal capture unit.

The apparatus is preferably arranged to convert the light output signals from the beacons into digital signals for processing by the signal processor. There may therefore be transducers for converting the light signals into electric signals. The signal capture unit may be arranged to receive the light output signals from the beacons by means of receiving the light directly. In such a case, the signal capture unit may itself include one or more light transducers. The light transducers may convert the light output signal into an electric signal. Alternatively, or additionally, one or more light transducers may be provided separately from the signal capture unit. In such a case, the output signals received by the signal capture unit may include electric signals converted by the light transducers from light reflected in a room. There may be a transducer that is arranged to generate electric signals from light signals reflected by objects in each of a plurality of different rooms. The or each transducer may be in the form of a photodiode.

The light source may be a laser light source. The laser light source is preferably in the form of an infrared (IR) laser unit.

The apparatus may further comprise a room occupancy sensing apparatus. The room occupancy sensing apparatus may comprise at least one light source arranged to emit a series of light pulses. The room occupancy sensing apparatus may comprise a plurality of waveguides, at least some of the waveguides being arranged to deliver light from the light source to one or more output nodes located in each of the plurality of rooms. The room occupancy sensing apparatus may comprise at least one signal capture unit arranged to receive output signals resulting from light reflected by objects in the plurality of rooms. The room occupancy sensing apparatus may comprise a signal processor. The apparatus may be arranged so as to be able to distinguish between a light pulse reflected by an object in a room delivered to that room via any one output node from a reflected light pulse originating from any output node associated with any different room. The apparatus may be so arranged that, in use, the signal processor compares the shape of the waveform of the signal received at the signal capture unit in response to a first emitted light pulse with the shape of the waveform of the signal received at the signal capture unit in response to a second emitted light pulse. Thus, the apparatus may be able both to detect movement in a room and to ascertain the particular room in which movement has occurred by virtue of (i) detecting a difference between the shapes of the waveforms of the signals received by the signal capture unit resulting from reflected light pulses from such first and second emitted light pulses and (ii) relating said reflected light pulses to the room concerned.

As mentioned above, the apparatus is advantageously able to distinguish between a light pulse reflected by an object in a room delivered to that room via any one output node and a reflected light pulse originating from any other output node. This may be achieved in any suitable way. In the described embodiments, where the width (duration) of the light pulses is relatively low, the timing of the pulse is used to determine which node the pulse has been reflected from. Preferably, the apparatus introduces a time delay between the light delivered to one room and the light delivered to the next room. When using a single light source with many rooms, this may be achieved by emitting a single pulse, splitting that pulse for delivering to multiple different output nodes, and ensuring that the path length to each such output node differs sufficiently that the pulses are emitted from each output node with a delay between successive pulses at the time they are emitted. Thus, the reflected pulses are then advantageously separated from each other temporally, allowing the apparatus to determine the output node from which a reflected pulse originated. Conveniently, the waveguides that deliver the light to the output nodes differ in length sufficient to introduce such a time delay between the pulses by successive output nodes. It will be appreciated that a waveguide for delivering light from a light source to a distant room will necessarily have a minimum length that is longer than the minimum length required of a waveguide for delivering light to a room that is closer to the light source. As such, it may be convenient (but not necessary) to build in a longer time delay in relation to output nodes that are further away from the light source than the time delay in relation to output nodes that are closer to the light source. Alternatively, or additionally, different wavelengths of light could be used to distinguish between light sent to and reflected by certain rooms. Alternatively, or additionally, more light transducers could be provided per room. Each room may comprise one or more input nodes for collecting light reflected in the room. Conveniently, at least some of the plurality of waveguides are arranged for delivering light reflected by objects in the plurality of rooms, via one or more input nodes in each room, to the signal capture unit. At least some of the plurality of waveguides are arranged both to deliver light from the light source to one or more output nodes and to deliver reflected light from one or more input nodes. Thus, the same waveguide may be used both to deliver light and to receive reflected light. At least one input node may also perform the function of an output node. (As such references herein to an "output" node may, where the context so allows, equally apply to an "input" node and *vice versa.* Also, features described with reference to one of the three principal types of node, namely (a) an input node, (b) an output node, or (c) a node that performs both as an input node and an output node, may equally apply to a node of a different one of those three types.) There may be advantages in having more input nodes in a room than the number of output nodes in that room, for example in view of the way in which light may be reflected within the layout of a certain room. Each input node may be arranged to collect and/or detect light at a given region, but may not be configured to distinguish between the intensity or wavelength of the light at different positions within that region. In effect, each input node may be in the form of a single pixel node. Whilst, there may be many nodes arranged in a room a majority of the nodes are preferably spaced apart from each other.

There are preferably a plurality of output nodes. The series of light pulses may be emitted from the output nodes in a set sequence with a set time delay between the successive emissions. The set time delay may be the same as between a first pair of successive emissions (for a given beam for example) and a second pair of successive emissions (for the same beam for example) . The set time delay may be different as between a first pair of successive emissions and a later pair of successive emissions (for example for the same beam). There may be such a time delay between every beam in a given space (such as a room). The provision of such time delays preferably allows for changes / movement to be detected on a per beam basis.

The nodes may each be provided with an appropriate lens suited to ensure that the node covers the intended area of the room. A Fresnel lens may be used for example.

Embodiments of the apparatus of the invention are thus advantageously able to detect movement in a room by virtue of detecting a difference between signals, preferably by comparing the shapes of the waveforms of the signals, received by the signal capture unit resulting from reflected light pulses from such first and second emitted light pulses. Embodiments of the apparatus of the invention are able to ascertain the particular room in which detected movement has occurred by virtue of relating said reflected light pulses to the room concerned (for example by relating said reflected light pulses to the appropriate output node and therefore to the room associated with that output node).

The room occupancy sensing apparatus may comprise one or more transducers for converting varying light signals reflected by objects in the rooms into electric signals having a resolution sufficient to enable detection of changes in light intensity of a duration of a nanosecond.

At least some of the plurality of waveguides of the room occupancy sensing apparatus may be arranged for both delivering light reflected by objects in the plurality of rooms, via one or more input nodes in each room, to the signal capture unit and for delivering light from the light source to one or more output nodes. At least one input node may also perform the function of an output node. The apparatus may be configured, during an uninterrupted state of actively monitoring the building, to detect movement or occupancy in a room, to indicate that the room is so occupied, to deem subsequently that the room is no longer occupied, and to indicate that the room is no longer occupied.

The apparatus may be arranged to use the light pulses emitted by the light source of the room occupancy sensing apparatus as synchronisation pulses for the beacons. Alternatively, the apparatus may use different light pulses for room occupancy sensing and as synchronisation pulses for the beacons. For example, the apparatus may use light pulses of a first wavelength for room occupancy sensing and of a second, different, wavelength for synchronisation of the beacons.

Some or all of the plurality of waveguides of the room occupancy sensing apparatus may also be waveguides of the plurality of waveguides arranged to receive the light output signal from one or more of the beacons when said one or more of the beacons is active in that room. Alternatively, separate waveguides may be arranged for room occupancy sensing and beacon monitoring.

Some or all of the signal capture units of the room occupancy sensing apparatus may also be signal capture units of the plurality of signal capture units arranged to receive, via the waveguides, the light output signals resulting from the beacons in the rooms. Alternatively, separate signal capture units may be arranged for room occupancy sensing and beacon monitoring.

The signal processor of the room occupancy sensor may be or be comprised in the signal processor arranged to distinguish, in use, the light output signal from a first beacon in a first room from the light output signal from a second beacon in a second, different, room.

The apparatus may be arranged to combine, in recording and/or displaying, room occupancy data obtained from the room occupancy sensor with beacon data obtained from the monitoring of the beacons.

The step of monitoring for a difference between the shapes of the detected waveforms of the first and second reflected light pulses may comprise performing a direct comparison between (a) the shape of the detected waveform of the first reflected light pulse and (b) the shape of the detected waveform of the second reflected light pulse.

The step of monitoring for a difference between the detected waveforms may be performed by means of a signal processor, for example defined by or forming part of a computer.

There may be a step of storing in the memory of an electronic data storage unit data concerning the shape of a multiplicity of detected waveforms, preferably including some waveforms detected more than a few minutes ago, and more than an hour ago.

The method of the second aspect of the invention is a method of monitoring a building having a plurality of rooms. At least one beacon in at least one of the rooms transmits at least one light output signal. At least one waveguide in a room receives the light output signal(s) from one or more of the beacons when said one or more of the beacons is active in that room. The light output signals resulting from the beacons in the rooms are received via the waveguides and processed to identify the location and/or status of the beacon.

The building of the third aspect has a plurality of rooms and includes installed apparatus according to the first aspect.

At least one of the rooms may include (i) at least one beacon arranged to send a pre-selected signal indicative of an event or other circumstance and (ii) at least one other beacon arranged to send a pre-selected signal indicative of a different event or other circumstance. For example, at least one of the rooms may include a beacon arranged to send a pre-selected signal in the event of a fire and another beacon arranged to send a pre-selected signal in the event of a panic button being pressed.

The present invention has particular application in relation to monitoring large buildings with many rooms (ten or more). The building may have more than five rooms, and may have more than ten rooms. Preferably, more than five rooms (and possibly more than ten rooms) are provided with the beacons. Preferably, substantially all rooms in the building that are designed for human occupation are associated with at least one waveguide, and each waveguide has an output that is only associated with one room.

Optionally, the rooms in which one or more of the beacons are located may include at least one communal area, for example an open plan area, corridor, kitchen or lavatory area. The term "room" will be understood to cover within its scope such areas within building. The invention may thus have application into monitoring any part of a building.

There may be one or more further buildings having rooms that are also monitored by the same room occupancy sensing apparatus.

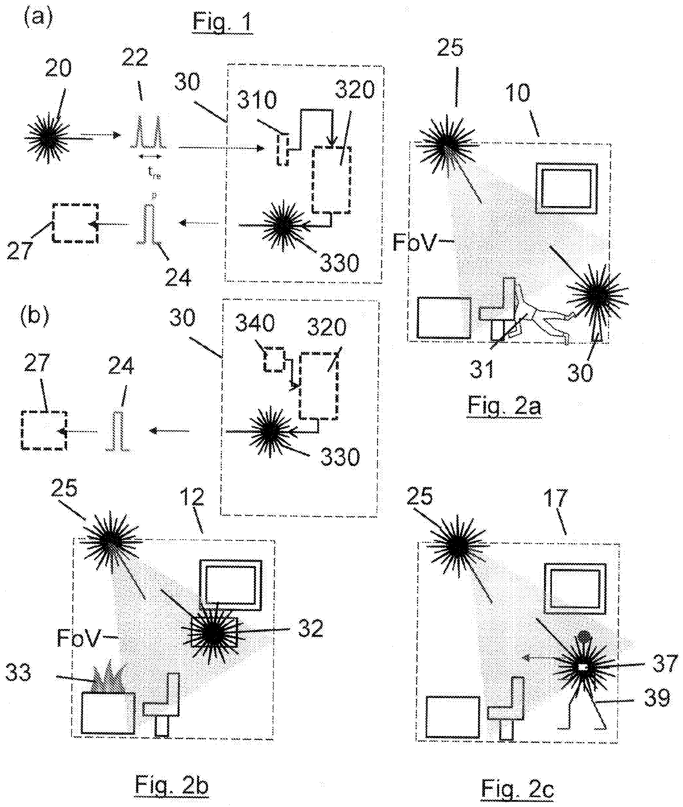

Figs. 1(a) and 2 illustrate schematically the principle of operation of building monitoring system in accordance with a first embodiment of the present invention. The system shown comprises a pulsed laser unit 20 which emits a train of identical pulses 22 of laser light separated by a specified repetition interval, tᵣₑₚ. The pulses 22 pass, via a waveguide network, to waveguide output nodes 25 in three rooms 10, 12, 17. In response, a respective beacon 30, 32, 37 within the Field of View (FoV) of a node 25 in each room, emits a light output signal in the form of a pulse 24. The pulses 24 emitted by the beacons are detected and processed by a central monitoring unit 27.

In the first room 10, a deployable beacon 30, in the form of a cone, has been deployed because a casualty 31 has been located in the room. In the second room 12, a permanently fixed beacon in the form of a fire alarm 32 has been activated due to the presence of a fire 33. In the third room 17, a beacon 37 in the form of a badge is worn by a security guard 39.

Each beacon includes (Fig. 1(a)) a photodetector 310 for detecting the pulses 22 from the waveguide output nodes 25. The photodetector 310 sends a signal indicative of the detection to a controller 320, which activates a laser 330 to emit the light output signal pulse 24.

In an alternative arrangement (Fig. 1(b)), there is no pulsed laser unit 20. Rather than using the train of identical pulses 22 as a synchronisation signal to trigger emission of the light output signal pulse 24, each beacon 30 includes a clock 340. The clock 340 emits a synchronisation signal which is received by the controller 320, which then activates a laser 330 to emit the light output signal pulse 24, as in the first embodiment. Thus, in this alternative embodiment, the waveguide output nodes 25 are used to receive the light output signal pulse 24, which is then carried by the waveguide to the central monitoring unit 27, but the waveguide nodes 25 are not used to output light signals.

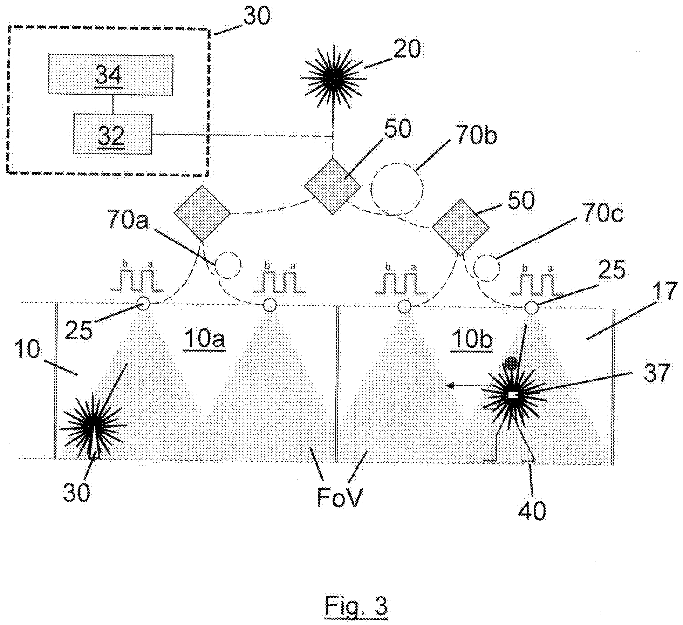

The first embodiment is shown in further detail in Figure 3. Two of the rooms of Fig. 2, room 10 and room 17, are shown in Figure 3. A single pulse laser unit 20 generates successive pulses 22 of laser light, with a period of tᵣₑₚ that are split by splitters 50 into multiple light paths (defined by fibre optic cable), each light path being associated with a respective pulse of light. The pulses are carried by fibre optic cable to multiple waveguide outputs in the form of nodes 25. A node is formed at the end of the fibre optic cable in the room to be monitored and is associated with a suitable lens in order to provide an adequate field of view (although it would be possible for an output node to be defined by the open end of the bare fibre, which would in any case provide a relatively wide field of view). The fan-out structure of the fibre optic cable network illustrated in Fig. 3, particularly the arrangement of signal splitters 50 between the source 20 and each node 25, allows each node 25 to output approximately the same pulse power, meaning that any required amplification of the pulse waveforms for analysis can be substantially uniform. Return pulses 24 from beacons 30, 37 are carried back to the central monitoring unit 27, which includes both a transducer, in the form of detector 32, and a control unit 34. The control unit 34 includes a computer processor. The detector 32 receives and detects the pulses 24 emitted from the beacons and converts them into electrical digital waveforms. The control unit controls the operation of the system and also processes the digital pulse waveforms.

The pulses 22 from each output node 25 are emitted at different times, separated by a delay Δt. The delay Δt between the time at which one pulse is emitted from one node 25 and the time at which the same pulse is emitted from the next node 25 is introduced by a delay loop 70 in the relevant fibre optic cable. This may be achieved in practice by using fibre optic cables of varying lengths as delay lines - the longer the cable, the longer the time taken for a pulse 22 to be emitted from the output node 25 and the response pulse 24 from the beacon received by the detector 32. The length of the fibres is therefore incremented cumulatively for each node by a length equivalent to the required interval.

In Figure 3 it will be seen that the route to the leftmost node in the Figure, has no delay loops. The fibre optic cable route to the next node (second from the left) has a delay loop 70a that adds a delay of Δt. The fibre optic cable route to the next pair of nodes (the two nodes on the right) includes a larger delay loop 70b that adds a delay of 2At to the routes to both nodes. The route to the node on the far right also includes a further delay loop 70c that adds a delay of Δt. Thus, during operation, a laser pulse 22 is emitted by the source 20 and is then split into four laser pulses by the splitters 50, which arrive at the nodes at times T₀ (far left node), T₀+Δt, T₀+2Δt, and T₀+3Δt, respectively. The response pulses 24 travel from the beacons back through the nodes 60 to the capture unit 30 along the same route as taken by the pulse from the laser source 20 to each such node 60. The same node 60 is used both as output and input of laser light to and from the room. Thus a further delay is added so that the laser pulses 24 from the beacons are received back at the capture unit 30 at different times, separated by an interval of at least 2Δt.

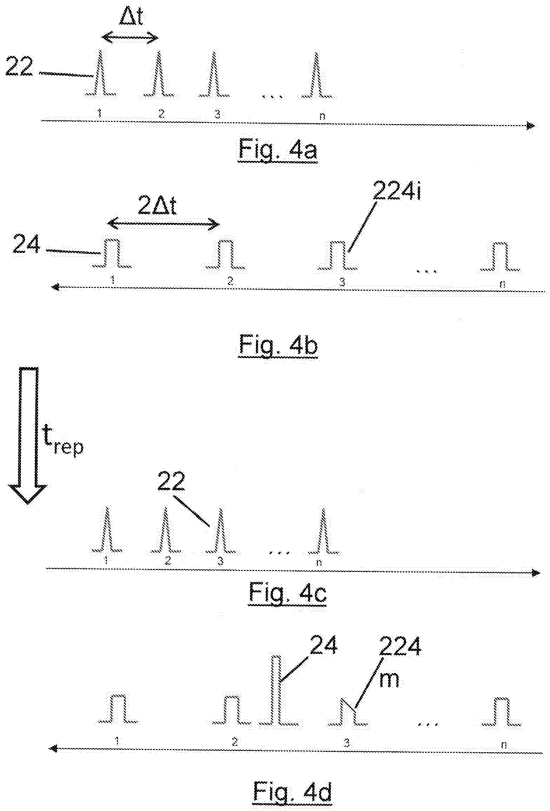

The length of the pulses 22 is chosen to be sufficiently short (relative to the delay Δt) and the separation between successive pulses 22 emitted by the laser source 20 is chosen to be sufficiently long (longer than the time between the instant at which the pulse 22 is emitted and last return pulse 24 is received at the capture unit) to ensure that the response pulses 24 received at the capture unit, originating from different nodes, do not overlap or interfere with each other and can be readily distinguished by the capture unit. Thus, for a system having *n* nodes, a single pulse emitted by the laser source is split into *n* pulses and emitted by the *n* nodes. The capture unit receives a sequence of up to *n* return pulses resulting from that single pulse emitted by the laser source, before the laser source emits the next pulse (consider also the explanation provided below with reference to Figure 4a to 4d of the second embodiment).

The returned pulses from the beacons are captured, digitised, stored and processed by the capture unit. The node from which the returned beacon pulse is received is identified by means of the time at which the pulse is received. In the present embodiment, the time tᵣₑₚ is about one second, equating to a pulse repetition rate (at the laser source) of about 1Hz. The rate may be calibrated according to the type of application/installation. The present embodiment is used in relation to rooms having a height of 5m, where the nodes are ceiling mounted. The average pulse from each node travels a 10m return journey from the node, via emission from the beacon in the room and back to the node. The light travels at 3 x 10⁸ ms⁻¹. A 10m journey by the light thus takes about 33 nanoseconds plus the time taken by the beacon between receiving and emitting a pulse. The width of the pulse emitted from the laser source is about 1 nanosecond (i.e. about 30cm).

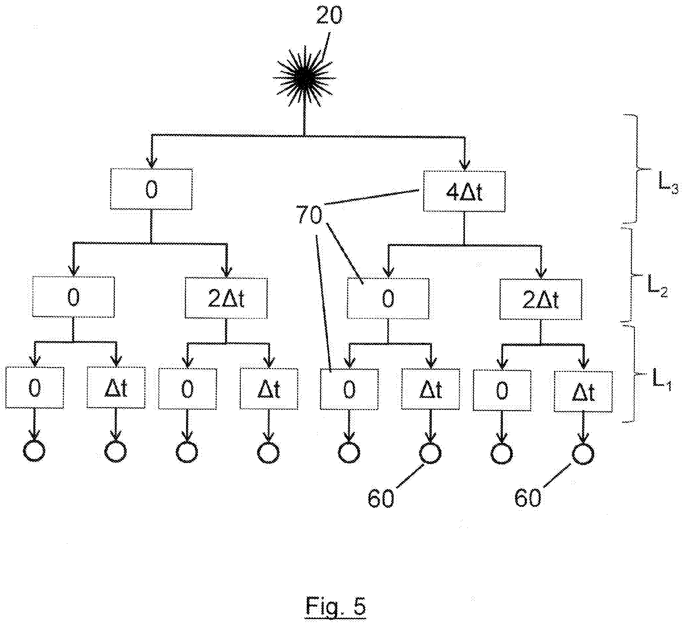

The system of the first embodiment can be readily scaled up by adding more splitters and delay loops. By way of illustration, Figures 4a to 4d and 5 illustrate a second embodiment of the invention installed in a building for monitoring a larger number of nodes. This embodiment includes, as part of the building monitoring system, an occupancy sensor as described in WO2014/041350 (MBDA UK Limited). The disclosure of WO2014/041350 (MBDA UK Limited), and especially the description of the occupancy sensor, is hereby incorporated by reference to more fully explain example embodiments incorporating occupancy sensors. Figures 4a to 4d show the steps of emitting and receiving pulses. In this embodiment, there is one node per room. Initially (Figure 4a) the laser source emits a single pulse, which by means of the delay loops, generates successive pulses at the respective output nodes. The successive pulses are separated by a time delay of Δt. Figure 4a shows the first three pulses and the last (nₜₕ) pulse only. Each pulse is emitted from an end of the fibre optic cable which is positioned and configured in each room to provide an adequate field of view. The pulse is then reflected in the room, a part of the reflection being detected via the same end of the fibre optic cable (so that the output node in each room also performs the function of the input node). Consequently (with reference to Figure 4b) as the reflected pulses 224 travel back via the fibre optic cable network, extra delays are introduced so that the received pulses are separated by time 2Δt. The reflected pulses 224 each have a modified waveform (compared to the emitted pulses) that depends in part on the physical layout of the room and the way in which the emitted pulse is reflected in the room and back to the input/output node. Each respective reflected pulse 224 may therefore have a shape that is particular to the layout and shape of the room and its contents (of field of view) at a given time. The reflected pulses 224 will therefore almost certainly have different waveform shapes.

After a time tᵣₑₚ the next pulse is emitted by the laser source (as shown schematically in Figure 4c). In this case, there has been a movement in room number 3 and no movement in any of the other rooms. As such this latter reflected waveform 224m (see Figure 4d) from the third node has a different shape from the immediately preceding reflected waveform 224i (see Figure 4b) from the third node. The capture unit compares successive reflected pulses from each node for changes sufficiently large to signify movement in the room. Thus, in this example, the capture unit detects a change in the shape of the third node's reflected pulses and deems the associated room to be occupied.

Also, a beacon has been activated in room number 2, and emits a pulse 24. The pulse 24 is detected by the capture unit in addition to the reflected pulses 224. The pulse 24 arrives in the time window corresponding to reflected pulses 224 from room 2, and so the capture unit identifies the beacon as being present in room number 2.

Figure 5 shows how the fibre optic cable network can be expanded to allow for many output/input nodes for each laser source / capture unit. Figure 5 shows a network for 8 nodes. The network has 3 levels, L1, L2, L3 (which in Figure 5 are labelled such that the level closest to the nodes is labelled L1). At each level, the number of pulses is doubled by means of optical splitter units dividing each pulse received by that unit into two pulses. Delay loops are then inserted to provide different delay times for each respective pulse as outputted at a node. The delay loops could of course be inserted differently, but for an efficient use of optical cable, longer delay loops are inserted closer to the source. Thus, in Figure 5, at the topmost level, L3, the single pulse from the laser light source 20 is split into two pulses, one passing down a left-hand branch to which no delay is added and one down a right-hand branch to which a delay of 4Δt is added. The two pulses then pass to the next level at which each pulse is split into two pulses, one having no delay added and one having a delay of 2Δt added. The process is repeated again at the lowest level, L1, with the split pulses having either no delay or a delay of Δt added. As a result, the pulses arriving at the nodes 60 have successive delays (from left to right) of 0, Δt, 2Δt, 3Δt ... 7Δt. If more than 8 nodes are required another level is added above level L3 in a similar pattern. Thus, for *n* nodes, there needs to be *l* levels, where *l* is equal to (log *n*) / (log 2), rounded up. The delay to be inserted at the *i*ₜₕ level will be equal to 2ⁱ⁻¹ (2 to the power of *i*-1) Δt. It will also be appreciated that 2*n* Δt will ideally be relatively low compared to tᵣₑₚ, so that all reflected pulses generated by a first pulse emitted from the laser source are received before the reflected pulses generated by the next pulse emitted from the laser source start to arrive. Similarly, the delay between beacons emitting and receiving pulses should be short enough, or tᵣₑₚ long enough, that all pulses emitted by beacons are received before the reflected and emitted pulses generated and triggered by the next pulse emitted from the laser source start to arrive.

The physical length of the delay loops introduced into the fibre optic cable network should be determined taking into account the length and refractive index of the fibre optic cable from the laser source to the nodes. Thus, the physical separation of rooms, and differing distances of the rooms from the location of the laser source may introduce part of the delay required for each node. For this reason, it may be more efficient and convenient if the nodes that are closest to the laser source are connected by fibre optic cables having less in the way of cable added to introduce delay loops, whereas the nodes that are further away have the longer delays.

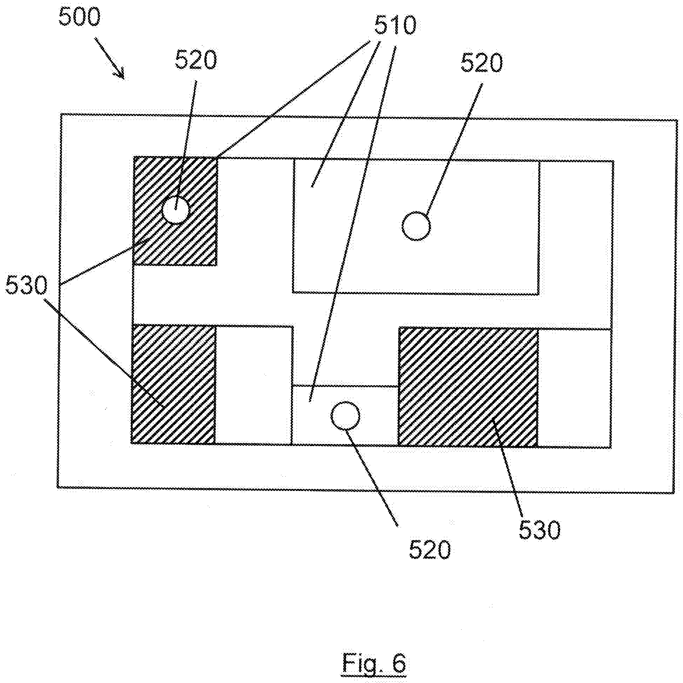

The capture unit thus identifies the rooms which are occupied and the rooms in which beacons are active. In some embodiments, the signal emitted by the beacon encodes a signal having a pre-determined meaning (e.g. "All Clear" or "Fire"). In such cases, the capture unit both identifies the rooms in which the beacons are active and identifies the meaning of the signal. The capture unit passes the locations of the beacons and, if appropriate, the meaning of their signals to one or more display units 500 (Fig. 6), which in this example display a map showing the rooms 510 in the building. The map indicates the rooms 520 in which the beacons are active (and, in some embodiments but not shown in Fig.6, their meaning, for example by use of different colours). The map also shows the rooms 530 which are occupied.

It will be seen that the scalable system illustrated by the first and second embodiments enable monitoring of large areas at relatively low cost, because the pulses emitted by the beacons are received by a smaller number of detectors than sensing areas (e.g. a single detector and capture unit).

The number of units required to provide full coverage of the area or areas of interest will depend on the Field of View (FoV) of each pulse output unit. Sensor FoV may be adjusted to the required width using optical lenses on each pulse unit. Maximum coverage using the minimum number of laser nodes and computers may be achieved by increasing sensor FoV. Conversely, using a greater number of laser nodes with a narrow FoV may enable the system to be used as a high-resolution motion location and therefore tracking system.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the above embodiments, the beacons send response pulses 24 in response to the signals 22 from a laser 20. In other example embodiments, the beacons send pulses 24 to the nodes in response to a triggering signal generated internally by the beacon, for example using an internal clock.

There may be more than one output node per room. The beams of light from each such output node may be less divergent than illustrated, so that relatively small areas are monitored by each beam. Such an approach may add to cost and/or complication, but provides a means of precisely locating movement/occupancy. The circuit and fibre optic cables for detecting and analysing reflections in the rooms may be separate from the circuit for causing pulses of light to be emitted in each room. Whilst having identical laser pulses (emitted from different output nodes) is desirable, this is not essential. More than one laser could be provided. The laser light is split in two at each level of signal splitting. The laser light could however be split into more separate pulses at each level of signal splitting.

Although the above discussion includes example applications of the invention in the field of building security, the invention may be used in other applications. For example, a building monitoring apparatus according to an example embodiment of the invention could be used in a hospital to communicate information, for example, patient information, to a central monitoring unit.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. Apparatus for monitoring a building having a plurality of rooms (10, 12, 17), the apparatus comprising:
- a plurality of beacons (30, 32, 37) each triggerable to transmit a light output signal;
- a plurality of waveguides (70a, 70b, 70c) for deployment in the building so that each of the plurality of rooms has at least one of the waveguides arranged to receive the light output signal from one or more of the beacons when said one or more of the beacons has been triggered in that room;
- at least one signal capture unit arranged to receive, via the waveguides, the light output signals resulting from the beacons in the rooms; and
- a signal processor;
wherein the signal processor is arranged to distinguish, in use, the light output signal from a first beacon in a first room from the light output signal from a second beacon in a second, different, room.

2. Apparatus as claimed in claim 1, wherein the signal processor is arranged to distinguish between the light output signal from the first beacon and the light output signal from the second beacon using a time delay between the light output signal from the first beacon arriving at the signal capture unit and the light output signal from the second beacon arriving at the signal capture unit.

3. Apparatus as claimed in claim 2, wherein the time delay results from a difference between the waveguide path length from the first room to the signal capture unit and the waveguide path length from the second room to the signal capture unit.

4. Apparatus as claimed in any preceding claim, in which some or all of the beacons are triggerable to send a pre-selected signal indicative of an event or other circumstance.

5. Apparatus as claimed in claim 4, in which some or all of the beacons are selectably configurable to send any of a plurality of pre-selected signals.

6. Apparatus as claimed in any preceding claim, in which the beacons are triggerable to transmit the light output signals in response to a synchronisation signal.

7. Apparatus as claimed in claim 6, in which the beacon includes or is connected to a clock and the synchronisation signal is provided by the clock.

8. Apparatus as claimed in claim 6, in which the synchronisation signal is a signal transmitted wirelessly to the beacon.

9. Apparatus as claimed in claim 6 or claim 8, in which the apparatus includes a light source for providing the synchronisation signal and the synchronisation signal is a synchronisation light signal transmitted to the beacon from the light source, for example using a waveguide.

10. Apparatus as claimed in claim 9, in which the synchronisation light signal is transmitted to the beacon from the light source using a waveguide and the waveguide is one of the plurality of waveguides arranged to receive the light output signal from one or more of the beacons.

11. Apparatus as claimed in any preceding claim, further comprising a room occupancy sensing apparatus, the room occupancy sensing apparatus comprising:
- at least one light source arranged to emit a series of light pulses,
- a plurality of waveguides, at least some of the waveguides being arranged to deliver light from the light source to one or more output nodes located in each of the plurality of rooms,
- at least one signal capture unit arranged to receive output signals resulting from light reflected by objects in the plurality of rooms, and
- a signal processor,
wherein
the apparatus is arranged so as to be able to distinguish between a light pulse reflected by an object in a room delivered to that room via any one output node from a reflected light pulse originating from any output node associated with any different room,
the apparatus is so arranged that, in use, the signal processor compares the shape of the waveform of the signal received at the signal capture unit in response to a first emitted light pulse with the shape of the waveform of the signal received at the signal capture unit in response to a second emitted light pulse,
whereby the apparatus is able both to detect movement in a room and to ascertain the particular room in which movement has occurred by virtue of (i) detecting a difference between the shapes of the waveforms of the signals received by the signal capture unit resulting from reflected light pulses from such first and second emitted light pulses and (ii) relating said reflected light pulses to the room concerned.

12. Apparatus as claimed in claim 11, arranged to use the light pulses emitted by the light source of the room occupancy sensing apparatus as synchronisation pulses for the beacons.

13. Apparatus as claimed in in claim 11 or claim 12, in which some or all of the plurality of waveguides of the room occupancy sensing apparatus are also waveguides of the plurality of waveguides arranged to receive the light output signal from one or more of the beacons when said one or more of the beacons has been triggered in that room.

14. A method of monitoring a building having a plurality of rooms (10, 12, 17), comprising:
- at least one beacon (30, 32, 37) in at least one of the rooms which has been triggered to transmit at least one light output signal;
- at least one waveguide (70a, 70b, 70c) in a room receiving the light output signal(s) from one or more of the beacons when said one or more of the beacons has been triggered in that room;
- receiving, via the waveguides, the light output signals resulting from the beacons in the rooms; and
- processing the light output signals received via the waveguides to identify the location and/or status of the beacon.

15. A building having a plurality of rooms, the building including installed apparatus according to any of claims 1 to 13.

## Patentansprüche

1. Vorrichtung zum Überwachen eines Gebäudes mit einer Mehrzahl von Räumen (10, 12, 17), wobei die Vorrichtung umfasst:
- eine Mehrzahl von Beacons (30, 32, 37), die jeweils ausgelöst werden können, um ein Lichtausgangssignal zu senden;
- eine Mehrzahl von Wellenleitern (70a, 70b, 70c) zum derartigen Einsatz im Gebäude, dass jeder der Mehrzahl von Räumen mindestens einen der Wellenleiter aufweist, der zum Empfangen des Lichtausgangssignals von einem oder mehreren der Beacons ausgelegt ist, wenn der eine oder die mehreren Beacons in diesem Raum ausgelöst wurden;
- mindestens eine Signalerfassungseinheit, die zum Empfangen der von den Beacons in den Räumen resultierenden Lichtausgangssignale über die Wellenleiter ausgelegt ist; und
- einen Signalprozessor;
wobei der Signalprozessor so ausgelegt ist, dass er in Verwendung das Lichtausgangssignal von einem ersten Beacon in einem ersten Raum vom Lichtausgangssignal von einem zweiten Beacon in einem zweiten, verschiedenen Raum unterscheidet.

2. Vorrichtung nach Anspruch 1, wobei der Signalprozessor so ausgelegt ist, dass er unter Verwendung einer Zeitverzögerung zwischen dem Lichtausgangssignal vom ersten Beacon, das an der Signalerfassungseinheit ankommt, und dem Lichtausgangssignal vom zweiten Beacon, das an der Signalerfassungseinheit ankommt, zwischen dem Lichtausgangssignal vom ersten Beacon und dem Lichtausgangssignal vom zweiten Beacon unterscheidet.

3. Vorrichtung nach Anspruch 2, wobei die Zeitverzögerung aus einer Differenz zwischen der Wellenleiterpfadlänge vom ersten Raum zur Signalerfassungseinheit und der Wellenleiterpfadlänge vom zweiten Raum zur Signalerfassungseinheit resultiert.

4. Vorrichtung nach einem der vorhergehenden Ansprüche, wobei einige oder alle der Beacons ausgelöst werden können, um ein im Voraus ausgewähltes Signal zu senden, das ein Ereignis oder einen anderen Umstand anzeigt.

5. Vorrichtung nach Anspruch 4, wobei einige oder alle der Beacons selektiv konfiguriert werden können, um ein beliebiges von einer Mehrzahl von im Voraus ausgewählten Signalen zu senden.

6. Vorrichtung nach einem der vorhergehenden Ansprüche, wobei die Beacons ausgelöst werden können, um die Lichtausgangssignale in Reaktion auf ein Synchronisationssignal zu senden.

7. Vorrichtung nach Anspruch 6, wobei der Beacon einen Taktgeber umfasst oder damit verbunden ist, und das Synchronisationssignal durch den Taktgeber bereitgestellt wird.

8. Vorrichtung nach Anspruch 6, wobei das Synchronisationssignal ein Signal ist, das drahtlos an den Beacon gesendet wird.

9. Vorrichtung nach Anspruch 6 oder 8, wobei die Vorrichtung eine Lichtquelle zum Bereitstellen des Synchronisationssignals umfasst, und das Synchronisationssignal ein Synchronisationslichtsignal ist, das von der Lichtquelle zum Beispiel unter Verwendung eines Wellenleiters an den Beacon gesendet wird.

10. Vorrichtung nach Anspruch 9, wobei das Synchronisationslichtsignal von der Lichtquelle unter Verwendung eines Wellenleiters an den Beacon gesendet wird, und der Wellenleiter einer der Mehrzahl von Wellenleitern ist, die zum Empfangen des Lichtausgangssignals von einem oder mehreren der Beacons ausgelegt sind.

11. Vorrichtung nach einem der vorhergehenden Ansprüche, ferner umfassend eine Raumbelegungssensorvorrichtung, wobei die Raumbelegungssensorvorrichtung umfasst:
- mindestens eine Lichtquelle, die zum Emittieren einer Reihe von Lichtimpulsen ausgelegt ist,
- eine Mehrzahl von Wellenleitern, wobei wenigstens einige der Wellenleiter so ausgelegt sind, dass sie Licht von der Lichtquelle einem oder mehreren Knoten zuführen, die in jedem der Mehrzahl von Räumen angeordnet sind,
- mindestens eine Signalerfassungseinheit, die so ausgelegt ist, dass sie Ausgangssignale empfängt, die von Licht resultieren, das von Objekten in der Mehrzahl von Räume reflektiert wird, und
- einen Signalprozessor,
wobei
die Vorrichtung so ausgelegt ist, dass sie in der Lage ist, zwischen einem Lichtimpuls, der von einem Objekt in einem Raum reflektiert und diesem Raum über einen Ausgangsknoten zugeführt wird, und einem reflektierten Lichtimpuls zu unterscheiden, der von einem Ausgangsknoten stammt, der mit einem anderen Raum assoziiert ist,
die Vorrichtung so ausgelegt ist, dass in Verwendung der Signalprozessor die Form der Wellenform des Signals, das an der Signalerfassungseinheit in Reaktion auf einen ersten emittierten Lichtimpuls empfangen wird, mit der Form der Wellenform des Signals vergleicht, das an der Signalerfassungseinheit in Reaktion auf einen zweiten emittierten Lichtimpuls empfangen wird,
wodurch die Vorrichtung aufgrund (i) eines Erkennens einer Differenz zwischen den Formen der Wellenformen der durch die Signalerfassungseinheit empfangenen Signale, die aus reflektierten Lichtimpulsen von solchen ersten und zweiten emittierten Lichtimpulsen resultiert, und (ii) Zuordnens der reflektierten Lichtimpulse zum betroffenen Raum in der Lage ist, sowohl Bewegung in einem Raum zu erkennen als auch den jeweiligen Raum festzustellen, in welchem Bewegung stattfand.

12. Vorrichtung nach Anspruch 11, die so ausgelegt ist, dass sie die von der Lichtquelle der Raumbelegungssensorvorrichtung emittierten Lichtimpulse als Synchronisationsimpulse für die Beacons verwendet.

13. Vorrichtung nach Anspruch 11 oder 12, wobei einige oder alle der Mehrzahl von Wellenleitern der Raumbelegungssensorvorrichtung auch Wellenleiter der Mehrzahl von Wellenleiter sind, die so ausgelegt sind, dass sie das Lichtausgangssignal von einem oder mehrere der Beacons empfangen, wenn der eine oder die mehreren der Beacons in diesem Raum ausgelöst wurden.

14. Verfahren zur Überwachung eines Gebäudes mit einer Mehrzahl von Räumen (10, 12, 17), umfassend:
- mindestens einen Beacon (30, 32, 37) in mindestens einem der Räume, der zum Senden mindestens eines Lichtausgangssignals ausgelöst wurde;
- mindestens einen Wellenleiter (70a, 70b, 70c) in einem Raum, der die Lichtausgangssignal(e) von einem oder mehreren der Beacons empfängt, wenn der eine oder die mehreren Beacons diesem Raum ausgelöst wurden;
- Empfangen der von den Beacons in den Räumen resultierenden Lichtausgangssignale über die Wellenleiter; und
- Verarbeiten der über die Wellenleiter empfangenen Lichtausgangssignale, um den Ort und/oder den Status des Beacons zu identifizieren.

15. Gebäude mit einer Mehrzahl von Räumen, wobei das Gebäude eine Vorrichtung nach einem der Ansprüche 1 bis 13 installiert aufweist.

## Revendications

1. Appareil destiné à surveiller un bâtiment ayant une pluralité de salles (10, 12, 17), l'appareil comprenant :
une pluralité de balises (30, 32, 37), chacune déclenchable pour transmettre un signal lumineux de sortie ;
- une pluralité de guides d'ondes (70a, 70b, 70c) pour déploiement dans le bâtiment de telle sorte que chacune de la pluralité de salles a au moins un des guides d'ondes agencé pour recevoir le signal lumineux de sortie provenant d'une ou plusieurs des balises quand lesdites une ou plusieurs des balises a été déclenchée dans cette salle ;
- au moins une unité de capture de signal agencée pour recevoir, par le biais des guides d'ondes, les signaux lumineux de sortie provenant des balises dans les salles ; et
- un processeur de signal ;
dans lequel le processeur de signal est agencé pour distinguer, à l'usage, le signal lumineux de sortie provenant d'une première balise dans une première salle du signal lumineux de sortie provenant d'une deuxième balise dans une deuxième salle, différente.

2. Appareil selon la revendication 1, dans lequel le processeur de signal est agencé pour faire la distinction entre le signal lumineux de sortie provenant de la première balise et le signal lumineux de sortie provenant de la deuxième balise en utilisant un délai entre l'arrivée du signal lumineux de sortie provenant de la première balise à l'unité de capture de signal et l'arrivée du signal lumineux de sortie provenant de la deuxième balise à l'unité de capture de signal.

3. Appareil selon la revendication 2, dans lequel le délai résulte d'une différence entre la longueur de chemin en guide d'ondes de la première salle à l'unité de capture de signal et la longueur de chemin en guide d'ondes de la deuxième salle à l'unité de capture de signal.

4. Appareil selon une quelconque revendication précédente, dans lequel tout ou partie des balises sont déclenchables pour envoyer un signal présélectionné représentatif d'un événement ou d'une autre circonstance.

5. Appareil selon la revendication 4, dans lequel tout ou partie des balises sont sélectivement configurables pour envoyer l'un quelconque d'une pluralité de signaux présélectionnés.

6. Appareil selon une quelconque revendication précédente, dans lequel les balises sont déclenchables pour transmettre les signaux lumineux de sortie en réponse à un signal de synchronisation.

7. Appareil selon la revendication 6, dans lequel la balise comporte ou est reliée à une horloge et le signal de synchronisation est délivré par l'horloge.

8. Appareil selon la revendication 6, dans lequel le signal de synchronisation est un signal transmis sans fil à la balise.

9. Appareil selon la revendication 6 ou la revendication 8, l'appareil comportant une source de lumière destinée à délivrer le signal de synchronisation et le signal de synchronisation est un signal de synchronisation lumineux transmis à la balise depuis la source de lumière, par exemple au moyen d'un guide d'ondes.

10. Appareil selon la revendication 9, dans lequel le signal de synchronisation lumineux est transmis à la balise depuis la source de lumière au moyen d'un guide d'ondes et le guide d'ondes en est un de la pluralité de guides d'ondes agencés pour recevoir le signal lumineux de sortie provenant d'une ou plusieurs des balises.

11. Appareil selon une quelconque revendication précédente, comprenant en outre un appareil de détection d'occupation de salle, l'appareil de détection d'occupation de salle comprenant :
- au moins une source de lumière agencée pour émettre une série d'impulsions lumineuses,
- une pluralité de guides d'ondes, au moins certains des guides d'ondes étant agencés pour délivrer la lumière provenant de la source de lumière à un ou plusieurs noeuds de sortie situés dans chacune de la pluralité de salles,
- au moins une unité de capture de signal agencée pour recevoir des signaux de sortie résultant de la lumière réfléchie par des objets dans la pluralité de salles, et
- un processeur de signal,
dans lequel
l'appareil est agencé de manière à pouvoir faire la distinction entre une impulsion lumineuse réfléchie par un objet dans une salle délivrée à cette salle par le biais d'un quelconque noeud de sortie et une impulsion lumineuse réfléchie provenant d'un quelconque noeud de sortie associé à une quelconque salle différente,
l'appareil est agencé de telle sorte que, à l'usage, le processeur de signal compare la forme de la forme d'onde du signal reçu à l'unité de capture de signal en réponse à une première impulsion lumineuse émise avec la forme de la forme d'onde du signal reçu à l'unité de capture de signal en réponse à une deuxième impulsion lumineuse émise,
moyennant quoi l'appareil peut à la fois détecter un mouvement dans une salle et vérifier la salle particulière dans laquelle un mouvement s'est produit en vertu de (i) la détection d'une différence entre les formes des formes d'onde des signaux reçus par l'unité de capture de signal résultant d'impulsions lumineuses réfléchies et ces première et deuxième impulsions lumineuses émises, et (ii) l'association desdites impulsions lumineuses réfléchies avec la salle concernée.

12. Appareil selon la revendication 11, agencé pour utiliser les impulsions lumineuses émises par la source de lumière de l'appareil de détection d'occupation de salle comme des impulsions de synchronisation pour les balises.

13. Appareil selon la revendication 11 ou la revendication 12, dans lequel tout ou partie de la pluralité de guides d'ondes de l'appareil de détection d'occupation de salle sont aussi des guides d'ondes de la pluralité de guides d'ondes agencés pour recevoir le signal lumineux de sortie provenant d'une ou plusieurs des balises quand lesdites une ou plusieurs des balises a été déclenchée dans cette salle.

14. Procédé de surveillance d'un bâtiment ayant une pluralité de salles (10, 12, 17), comprenant :
- au moins une balise (30, 32, 37) dans au moins une des salles qui a été déclenchée pour transmettre au moins un signal lumineux de sortie ;
- au moins un guide d'ondes (70a, 70b, 70c) dans une salle recevant le ou les signaux lumineux de sortie provenant d'une ou plusieurs des balises quand lesdites une ou plusieurs des balises a été déclenchée dans cette salle ;
- la réception, par le biais des guides d'ondes, des signaux lumineux de sortie provenant des balises dans les salles ; et
- le traitement des signaux lumineux de sortie reçus par le biais des guides d'ondes pour identifier l'emplacement et/ou l'état de la balise.

15. Bâtiment ayant une pluralité de salles, le bâtiment comportant un appareil installé selon l'une quelconque des revendications 1 à 13.
